# EUROPEAN PATENT APPLICATION

(11) **EP 1 453 053 A2**
(43) Date of publication of application: **01.09.2004**
(21) Application number: 04001487.0
(22) Date of filing: 23.01.2004
(51) Int. Cl.: G11B 27/10, G11B 20/10, G11B 19/02

(54) **Information recording apparatus**

(30) Priority: 30.01.2003 JP 2003022155
(71) Applicant: Kabushiki Kaisha Toshiba, Tokyo (JP)
(72) Inventor: Kurano, Tomoaki, Toshiba Corporation, Tokyo 105-8001 (JP)
(74) Representative: Henkel, Feiler & Hänzel

(57) **Abstract**

An information recording apparatus includes first and second information recording units (21, 22) configured to write and read data in a predetermined amount of data units, and a control section (29) configured to perform a switching control, such that when the data is being written in the first information recording unit (21) in the predetermined amount of data units, in a state where a preset condition relating to a recording operation is,not satisfied, the data in the predetermined amount of data units to be written in the first information recording unit (21) is written in the second information recording unit (22).

## Description

The present invention relates to an information recording apparatus for recording information by means of an information recording unit such as an HDD (hard disk drive).

As is well known, an HDD is in the mainstream of information recording units which record information for use in PCs (personal computers). For this purpose, the HDD records information in PC mode.

In the PC mode, in the state where a predetermined amount of information is recorded in an HDD, information is read out from the HDD and compared with information before record. Then, it is determined whether or not the information is recorded correctly.

If the information is not recorded correctly, the HDD records the same information in the same area.
This is called retry. The retry is repeated until the information is recorded correctly, so that the reliability of the recorded information can be maintained.

In recent years, the HDD is also used widely for recording AV (audio video) information. The AV information is transmitted in only one direction by, for example, broadcasting.

For this reason, when AV information is recorded by the HDD, if retry is repeated many times, a recording buffer for provisionally recording the input AV information and supplying it to the HDD may overflow, and the recording operation may stop.

Therefore, when AV information is recorded by the HDD, AV mode is used, in which the time for retry is restricted; that is, avoidance of the recording stop is given higher priority than the reliability of the recorded information.

However, in the AV mode, the reliability of the recorded information is reduced because of the restriction of the retry time. In addition, a secondary defect registration which requires a relatively long process time cannot be performed.

For the reasons described above, in the AV mode, if a considerable time is required to record, the AV information is not recorded but discarded. Therefore, in reproduction operation, block noise may occur on the screen or the reproduction operation may even be stopped.

In a RAID (redundant array of inexpensive disks) system or the like, a plurality of HDDs simultaneously record data at all times. Therefore, this system is disadvantageous in that the level of redundancy is high and an available recording time is short.

Jpn. Pat. Appln. KOKAI Publication No. 3-212859 discloses a structure for reading data at all times in parallel from different regions where the data are prerecorded, in order to improve the reproduction efficiency. Jpn. Pat. Appln. KOKAI Publications No. 6-251565 and 6-124530 disclose a method for managing and reproducing data in a case where data is recorded continuously over a plurality of disks.

However, none of these publications refers to suppression of increase in recording time due to retry or to improvement in reliability of recorded information.

An embodiment of the present invention aims at providing an information recording apparatus, which can effectively suppress an increase in recording time due to occurrence of retry and increase the reliability of recorded information to a practical level.

According to one aspect of the present invention, there is provided an information recording apparatus comprising: first and second information recording units configured to write and read data in a predetermined amount of data units; and a control section configured to perform a switching control, such that when the data is being written in the first information recording unit in the predetermined amount of data units, in a state where a preset condition relating to a recording operation is not satisfied, the data in the predetermined amount of data units to be written in the first information recording unit is written in the second information recording unit.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram for explaining an information recording and reproducing apparatus according to an embodiment of the present invention;
FIG. 2 is a flow chart for explaining an operation of switching the recording operation from one HDD to another HDD according to the embodiment;
FIG. 3 is a flow chart for explaining another operation of switching the recording operation from one HDD to another HDD according to the embodiment;
FIG. 4 is a diagram for explaining data recording conditions in the two HDDs at the time when the recording operation of the embodiment is completed;
FIG. 5 is a diagram for explaining data recording conditions in the two HDDs in the state where data is copied from one HDD to another HDD and deleted;
FIG. 6 is a flow chart for explaining an operation of copying data recorded in one HDD to another HDD; and
FIG. 7 is a flow chart for explaining a scan process operation of an HDD according to the embodiment of the present invention.

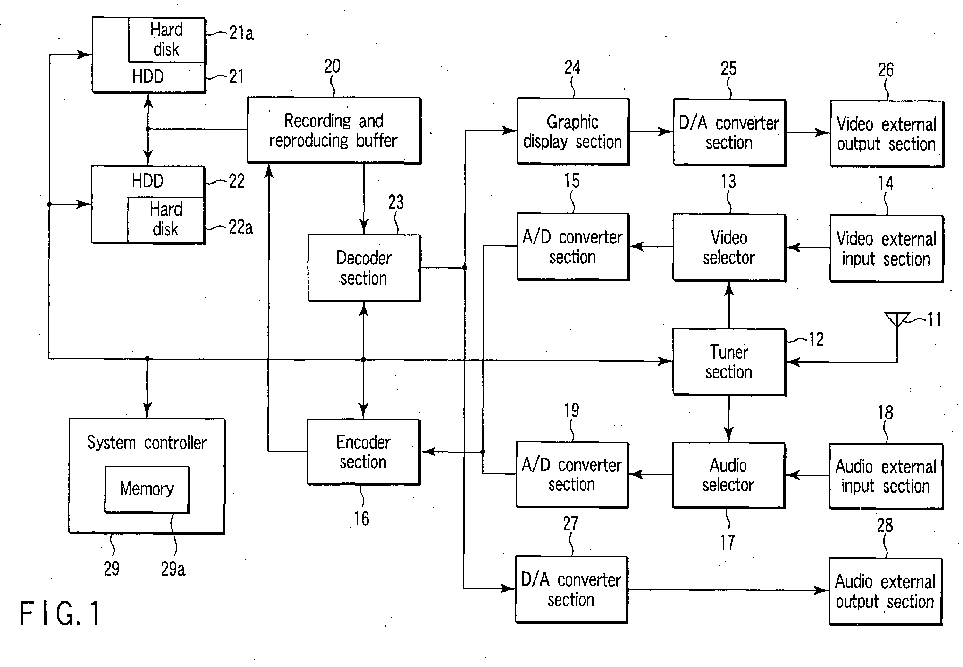

An embodiment of the present invention will be described in detail with reference to the accompanying drawings. FIG. 1 shows an information recording and reproducing apparatus of the embodiment. A television broadcasting signal received by an antenna 11 is supplied to a tuner section 12, which selects a video signal and audio signal of a predetermined channel.

The video signal selected by the tuner section 12 is supplied to one input terminal of a video selector 13. The video selector 13 selectively outputs the video signal selected by the tuner section 12 and a video signal input thereto through a video external input section 14 to an A/D (analog/digital) converter section 15. The A/D converter section 15 digitizes the video signal input thereto and supplies the digital signal to-an encoder section 16.

The audio signal selected by the tuner section 12 is supplied to one input terminal of an audio selector 17. The audio selector 17 selectively outputs the audio signal selected by the tuner section 12 and an audio signal input thereto through an audio external input section 18 to an A/D (analog/digital) converter section 19. The A/D converter section 19 digitizes the audio signal input thereto and supplies the digital signal to the encoder section 16.

The encoder section 16 subjects the input audio signal and the video signal individually to a conversion process to the MPEG (moving picture experts group) 2 format. The audio and video signals output from the encoder section 16 are passed through a recording and reproducing buffer 20, which performs a cache process, and supplied to two HDDs 21 and 22 via an ATA (AT attachment) interface. Then, the audio and video signals are selectively recorded in hard disks 21a and 22a of the HDDs 21 and 22.

An audio and video signal selectively reproduced from the HDDs 21 and 22 is supplied to the recording and reproducing buffer 20 through the ATA (AT attachment) interface, and then supplied to a decoder section 23. The decoder section 23 subjects the input audio signal and video signal to the MPEG 2 decode process, and demodulates them to the original audio signal and video signal.

The video signal output from the decoder section 23 is supplied to a graphic display section 24. The graphic display section 24 adds various display contents to the video signal. The video signal with the display contents is then converted to an analog signal by a D/A (digital/analog) converter 25, and externally output via a video external output section 26. The audio signal output from the decoder section 23 is converted to an analog signal by a D/A converter 27, and externally output via an audio external output section 28.

A series of recording and reproducing operations, as described above, is subjected to centralized control by a system controller 29. The system controller 29 is formed of, for example, a CPU (central processing unit) or the like. It controls the sections of the apparatus in accordance with the operation information input by the user and based on the control program recorded in a memory 29a incorporated therein. The memory 29a is also used to provide the CPU with a work area and record set data, etc.

In the structure described above, it is assumed that the audio and video signals are recorded in the HDD 21. In this state, if the retry time of the HDD 21 continues for a long time, the amount of data accumulated in the recording and reproducing buffer 20 gradually increases.

For example, assuming that the data record rate of the recording and reproducing buffer 20 is 10 Mbps (Mega bit per second) and the record capacity is 5 Mbytes, if the HDD 21 spends only four seconds in retry, the recording and reproducing buffer 20 overflows and the HDD 21 is brought into a record stop state.

To prevent the HDD 21 from the record stop state, the HDD 22 is automatically set to a recording state, if the retry time of the HDD 21 exceeds a predetermined duration of time. Then, the signal that cannot be recorded in the HDD 21 by the retry is recorded in the hard disk 22a of the HDD 22.

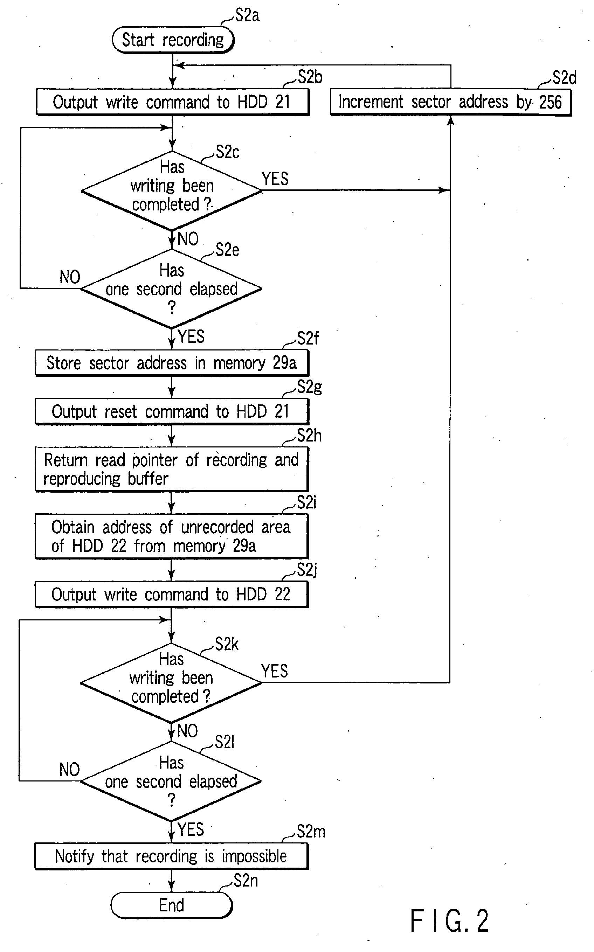

FIG. 2 is a flow chart explaining an operation of switching the recording operation from the HDD 21 to the HDD 22. First, when the recording operation starts (a step S2a), the system controller 29 outputs a write command to the HDD 21 in a step S2b. The write command is a record request in units of 256 sectors (1 sector = 512 bytes). In other words, the retry is performed in units of 256 sectors.

The system controller 29 determines whether the writing of 256 sectors has been completed in a step S2c. If it is determined that the writing has been completed (YES), the sector address is incremented by 256 in a step S2d, and then the process of the step S2b is performed.

If it is not determined that the writing has been completed (NO) in the step S2c, the system controller 29 checks in a step S2e whether one second has elapsed since the output of the write command. If it is determined that one second has not elapsed (NO), the process of the step S2c is performed.

If it is determined in the step s2e that one second has elapsed (YES), the process advances to a step S2f, in which the system controller 29 stores in the memory 29a the sector address at the timing when the write command was output to the HDD 21. Thereafter, the system controller 29 outputs a reset command to cancel the write command with respect to the HDD 21 in a step S2g.

Normally, it takes only several tens of milliseconds to record data in one cycle (256 sectors). If there is a defective sector, a write retry is repeated. If it is unable to record data even through the retry, data is recorded in a substitute area. In this case, at most three seconds are required.

Further, there is a possibility that a target address cannot be sought due to dusts generated in the HDD after the manufacturing. In this case, there is no upper limit in duration of time required for this seek. Therefore, if the writing has not been completed in one second after the write command is output to the HDD 21, the system controller 29 determines that the retry process is performed inside the HDD 21 and the recording operation is switched to the HDD 22.

In this case, it is necessary that HDD 22 record signals from the first, which cannot be recorded in the HDD 21. Therefore, the system controller 29 controls a read pointer of the recording and reproducing buffer 20 to'return to a predetermined position in a step S2h.

A target area in the HDD 22 must be an unrecorded area. Therefore, in a step S2i, the system controller 29 obtains information on the address of an unrecorded area of the HDD 22 from the memory 29a. The system controller 29 sets the obtained address to a command parameter, and outputs a write command to the HDD 22 in a step S2j.

Thereafter, the system controller 29 checks in a step S2k whether the HDD 22 has completed the writing of 256 sectors. If it determines that the writing has been completed (YES), the process of the step S2d is performed.

In the step S2k, if it is determined that the writing has not been completed (NO), the system controller 29 checks in a step S2l whether one second has elapsed since the output of the write command. If it is determined that one second has not been elapsed (NO), the step S2k is performed.

If it is determined in the step S2l that one second has elapsed (YES), the system controller 29 notifies the user that the recording is impossible by means of an image or sound in a step S2m, and ends the recording process (a step S2n).

If the system controller 29 determines in the step S2l that one second has elapsed (YES), it follows that a long-time retry occurs in both the two HDDs 21 and 22. Such an event cannot practically occur.

In the operations shown in FIG. 2, if the writing has not completed in one second since the write command was issued to the HDD 21, the signal that cannot be written in the HDD 21 is automatically written in the HDD 22. Therefore, the increase in record time due to the occurrence of retry can be effectively coped with. As a result, the reliability of the recorded information can be increased to a practical level.

The condition of switching the writing operation from the HDD 21 to the HDD 22 is not limited to time. For example, the number of retries, that have occurred since the issuance of the write command to the HDD 21, may be counted, and if it exceeds a preset limited number, the writing operation may be switched.

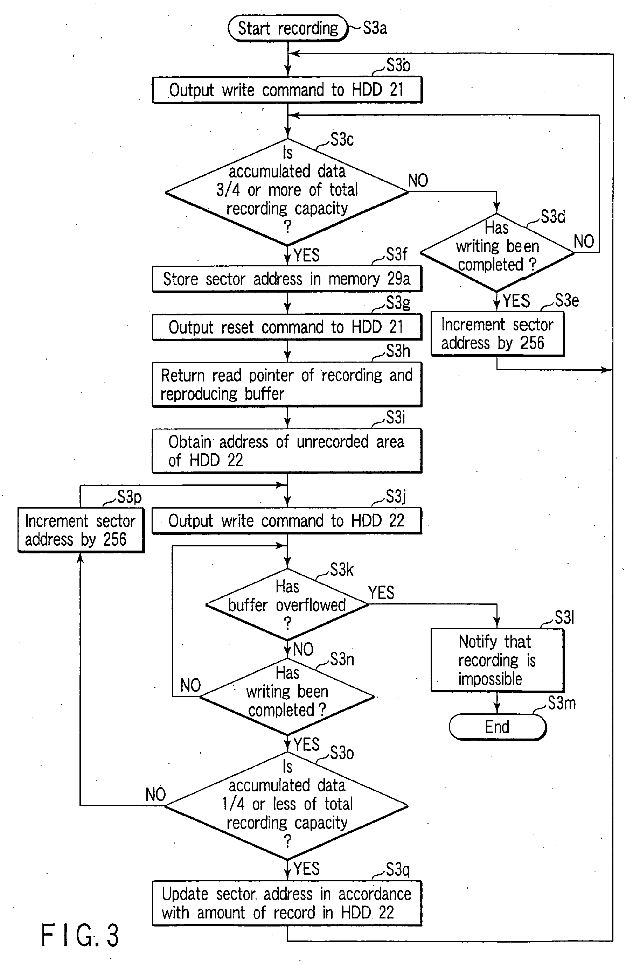

FIG. 3 is a flow chart explaining another operation of switching the recording operation from the HDD 21 to the HDD 22. First, when the recording operation starts (a step S3a), the system controller 29 outputs a write command to the HDD 21 in a step S3b.

In a step S3c, the system controller 29 checks whether the amount of data accumulated in the recording and reproducing buffer 20 is three fourths or more of the total recording capacity thereof. If the amount of data is determined to be less than three fourths of the total recording capacity (NO), the system controller 29 checks in a step S3d whether the writing of 256 sectors is completed. If it is not determined that the writing is completed (NO), the process of the step S3c is performed.

If it is determined in the step S3d that the writing is completed (YES), the system controller 29 increments the sector address by 256' in a step S3e, and performs the process of the step S3b.

In the step S3c, if the amount of data accumulated in the recording and reproducing buffer 20 is determined to be three fourths or more of the total recording capacity (YES), the process advances to a step 3f, in which the system controller 29 stores in the memory 29a the sector address at the timing when the write command was previously output to the HDD 21. Thereafter, the system controller 29 outputs a reset command to cancel the write command with respect to the HDD 21 in a step S3g.

In a step S3h, the system controller 29 returns the read pointer of the recording and reproducing buffer 20 to a predetermined point. Further, in a step S3i, the system controller 29 obtains information on the address of the unrecorded area of the HDD 22 from the memory 29a. Then, it sets the obtained address to a command parameter, and outputs a write command to the HDD 22 in a step S3j.

Thereafter, in a step S3k, the system controller 39 checks whether the recording and reproducing buffer 20 has overflowed or not. If it is determined that the buffer 20 has overflowed (YES), the system controller 29 notifies the user in a step S3l that the recording is impossible by means of an image or sound, and ends the recording process (a step S3m).

If it is determined in the step S3k that the recording and reproducing buffer 20 has not overflowed (NO), the system controller 29 checks in a step S3n whether the writing of 256 sectors has been completed in the HDD 22. If it is not determined that the writing has been completed (NO), the process of the step S3k is performed.

If it is determined in the step S3n that the writing has been completed (YES), the system controller 29 checks in a step S3o whether the amount of data accumulated in the recording and reproducing buffer 20 is one fourth or less of the total recording capacity thereof. If the amount of data is determined to be one fourth or less of the total recording capacity (NO), the system controller 29 increments the sector address by 256 in a step S3p, and performs the process of the step S3j.

If the amount of data accumulated in the recording and reproducing buffer 20 is one fourth or less of the total recording capacity thereof in the step S3o (YES), the system controller 29 updates the sector address in accordance with the amount of record in the HDD 22 in a step S3q, and performs the process of the step S3b.

That is, when the amount of data recorded in the recording and reproducing buffer 20 becomes one forth or less of the total recording capacity thereof, the target is switched to the HDD 21 again. In this case, the record restart address in the HDD 21 is equal to the sum of the address at which the HDD 21 has written last and the address corresponding to the amount of data written by the HDD 22.

For example, if data is written in first to thousandth sectors in the HDD 21 and thereafter first to hundredth sectors in the HDD 22, the HDD 21 restarts recording at the sector address of the one thousand and hundredths sector (=1000+100).

In the operations shown in FIG. 3, if the amount of data recorded in the recording and reproducing buffer 20 is three fourths or more of the total recording capacity during the operation of recording in the HDD 21, the recording operation is automatically switched to the HDD 22. Therefore, the increase in duration of record time due to the occurrence of retry can be effectively coped with. As a result, the reliability of the recorded information can be increased to a practical level.

In the operations shown in FIGS. 2 and 3, the audio and video signals separately recorded in the two HDDs 21 and 22 can be transferred to either the HDD 21 or 22, if the load is well within the capacity of the HDD when all recording is completed.

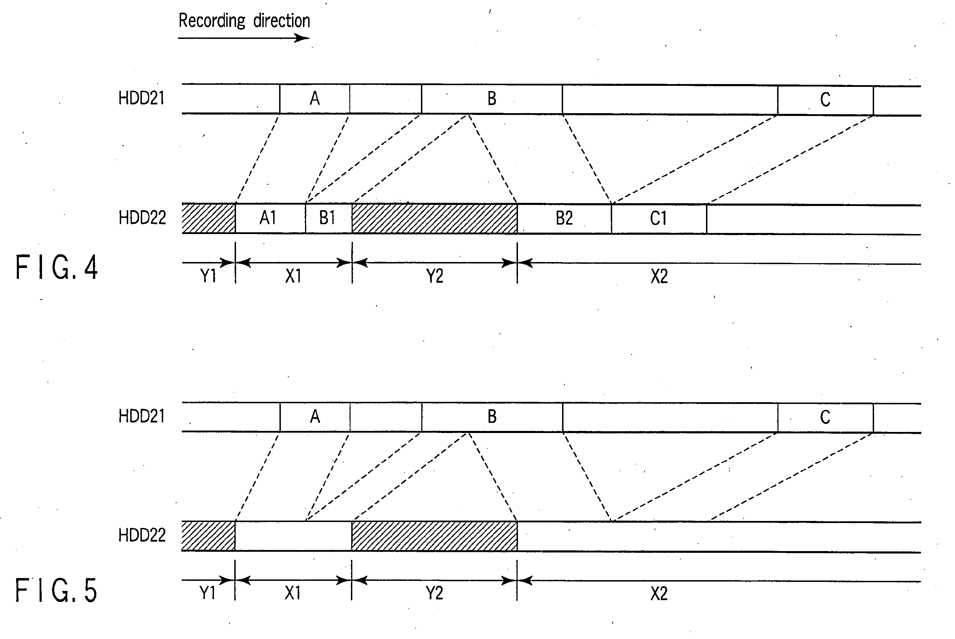

FIG. 4 shows data recording conditions in the two HDDs 21 and 22 at the time when the recording operation has completed. In FIG. 4, consecutive logical addresses are represented as a belt. Recording is performed in the HDD 21 and is switched to the HDD 22 at the three positions of A, B and C.

X1 and X2 represent unrecorded areas in the HDD 22 and Y1 and Y2 represent recorded areas. When the recording is switched to the HDD 22, it starts from the lowest-number address of the unrecorded area.

More specifically, data in an area A is recorded in'the unrecorded area X1 following the recorded area Y1 (A1), starting from the leading address of the area X1. Data in an area B is recorded in an area immediately after the data in the area A1 of the unrecorded area X1. However, since the data reaches the recorded area Y2 during the recording, it is divided into the two areas of the unrecorded area X1 and the unrecorded area X2 following the recorded area Y2 (B1 and B2). Data in an area C is recorded in an area immediately after the data in the area B2 of the unrecorded area X2 (C1).

The sizes (numbers of sectors) of the respective areas are as follows: A=A1, B=B1+B2 and C=C1, and the address information of each area is stored in the memory 29a. Therefore, it is easy to recover the divided data to the consecutive data in the HDD 21. Further, it is possible to delete the data in the HDD 22 after it is copied to the HDD 21. The data transfer between the HDDs 21 and 22 is carried out via the recording and reproducing buffer 20.

FIG. 5 shows data recording conditions in the two HDDs 21 and 22 in the state where data is copied from the HDD 22 to the HDD 21 and deleted. In this case, rewriting is tried on the area in the HDD 21 where the retry of long duration_previously occurred. Therefore, it is naturally expected that a retry process of long duration may occur again, and several seconds or longer time may be spent.

However, since the aforementioned copy process is performed off-line after the recording is completed, a temporal restriction is not imposed. In addition, the copy process is carried out in the PC mode. In the PC mode, if there is a sector in which data cannot be normally recorded even through repeated retries, such a sector is registered as a defective sector. Data to be recorded in a defective sector is recorded in a substitute sector. Therefore, data cannot be lost. The relief of the defective sector is automatically carried out in the HDDs 21 and 22, and need not be managed by the system controller 29.

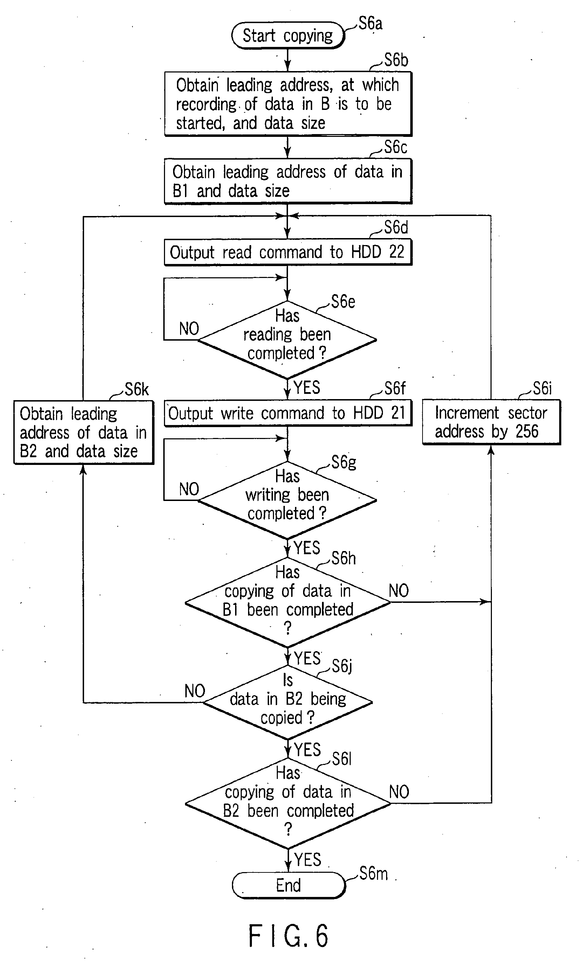

FIG. 6 is a flow chart for explaining an operation of copying data recorded in the areas B1 and B2 (see FIG. 4) of the HDD 22 to the HDD 21. When copying is started (a step S6a), the system controller 29 obtains, from the memory 29a, a leading address at which recording of the data in the area B of the HDD 21 is to be started and information indicative of the data size (a step S6b).

In a step S6c, the system controller 29 obtains, from the memory 29a, a leading address where the data in the area B1 in the HDD 22 is recorded and information indicative of the data size.

Thereafter, in a step S6d, the system controller 29 outputs a read command to the HDD 22, and reads data of 256 sectors in the area B1 from the HDD 22.

In a step S6e, the system controller 29 checks whether the reading of 256 sectors has been completed. If it is determined that the reading has been completed (YES), the system controller 29 outputs a write command to the HDD 21 in a step S6f, thereby causing the HDD 21 to record the data of 256 sectors in the area B1 read from the HDD 22.

In a step S6g, the system controller 29 checks whether the writing of 256 sectors in the HDD 21 has been completed. If it is determined that the writing has been completed (YES), the system controller 29 checks in a step S6h whether all data in the area B1 has completely been copied. As described above, it may take a considerable time to write data in this time. However, the system controller 29 continues to wait until the writing is completed.

Then, in a step S6h, if it is determined that all data in the area B1 has not been copied (NO), the system controller 29 increments the sector address by 256 in a step S6i, and performs the process of the step S6d.

If it is determined that all data in the area B1 has been copied in the step S6g (YES), the system controller 29 checks in a step S6j whether the data in the area B2 is being copied from the HDD 22 to the HDD 21. If it is determined that the data is not being copied (NO), the system controller 29 obtains, from the memory 29a, a leading address of the area where the data in the area B2 in the HDD 22 is recorded and information indicative of the data size (the step S6k). Then, the process of the step S6d is performed.

In the step S6j, if it is determined that the data in the area B2 is being copied (YES), the system controller 29 checks in a step S6l whether the data in the area B2 has completely been copied.

If it is determined that the copying has not been completed (NO), the system controller 29 performs the process of the step S6j. If it is determined that the copying has been completed (YES), the system controller 29 ends the process (a step S6m).

A background process will now be described, which is performed when the process load is low, for example, when the HDDs 21 and 22 do not perform recording or reproducing. In the information recording and reproducing apparatus shown in FIG. 1, if one HDD 21 is unable to record data, the other HDD 22 is substituted for the HDD 21 to record the data. Therefore, there is substantially no possibility that neither of the HDDs 21 and 22 is able to record the data.

However, to ensure a more reliable effect, it is necessary to scan the HDDs 21 and 22 with a certain frequency. The scan process may take a considerable time, since it is desirable that the scan process be performed under the conditions that read and write operations are carried out in the PC mode and all recorded and unrecorded areas of both the HDDs 21 and 22 be scanned. Therefore, the scan process need be performed when the process load is low.

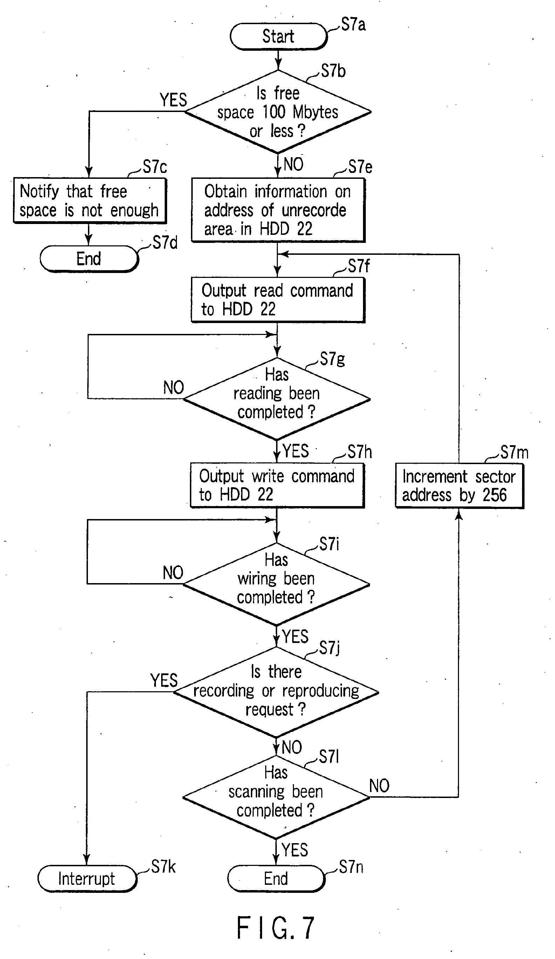

FIG. 7 is a flow chart for explaining a scan process operation of the HDD 22. Since a scan process operation of the other HDD 21 is performed in the same manner, the description thereof is omitted.

When the scan process operation starts (a step S7a), the system controller 29 checks in a step S7b whether the free space for recording in the HDD 22 is 100 Mbytes or less.

If it is determined that the free space is 100 Mbytes or less (YES), the system controller 29 notifies the user that the free space is not enough by means of an image or sound in a step S7c, and ends the process (a step S7d).

If it is determined that the free space for recording in the HDD 22 exceeds 100 Mbytes (NO) in the step S7b, the system controller 29 obtains information on the address of an unrecorded area in the HDD 22 from the memory 29a in a step S7e.

Then, in a step S7f, the system controller 29 outputs a read command to the HDD 22 based on the obtained address information, and reads data of 256 sectors from predetermined sectors of the HDD 22.

In a step S7g, the system controller 29 checks whether the reading of 256 sectors has been completed. If it is determined that the reading has been completed (YES), the system controller 29 outputs a write command to the HDD 22 in a step S7h, thereby causing the HDD 22 to record the previously read data of 256 sectors in the same position of the HDD 22 in the PC mode.

Any defective sector found in this step is registered, and a substitute sector is prepared. Therefore, in an actual operation, an audio or video signal cannot be recorded in the defective sector. This process is automatically executed in the HDD 22 and need not be-managed by the system controller 29.

In a step S7i, the system controller 29 checks whether data of 256 sectors has completely been written in the HDD 22. If it is determined that the writing has been completed (YES), the system controller 29 checks in a step S7j whether the user has requested recording or reproduction of audio and video signals.

If it is determined that the user has requested recording or reproduction (YES), the system controller 29 interrupts the background process operation (a step S7k), and controls the apparatus in accordance with the request from the use.

If it is determined that the user has hot requested recording or reproduction in the step S7j (NO), the system controller 29 checks in a step S7l whether all unrecorded area in the HDD 22 has completely been scanned.

If it is determined that all unrecorded area in the HDD 22 has not been scanned (NO), the system controller 29 increments the sector address by 256 in a step S7m, and performs the process of the step S7f. If it is determined that the scan process has been completed (YES), the system controller 29 ends the process (a step S7n).

If there is no unrecorded area remaining in the HDD 22, the HDD 22 cannot be used as a substitute for the HDD 21. To prevent this, as indicated in the steps S7b and S7c, if the free space in the HDD 22 is 100 Mbytes or less, the system controller 29 notifies the user that the free space is not enough, so that the user can delete, for example, unnecessary recorded data from the HDD 22.

The present invention is not limited to the embodiment described above. In practice, the structural elements can be variously modified and embodied without departing from the scope of the invention. Further, a plurality of structural elements of the embodiment can be appropriately combined, so that various inventions can be made. For example, some of the structural elements of the embodiment may be deleted.

## Claims

1. An information recording apparatus **characterized by** comprising:
first and second information recording units (21, 22) configured to write and read data in a predetermined amount of data units; and
a control section (29) configured to perform a switching control, such that when the data is being written in the first information recording unit (21) in the predetermined amount of data units, in a state where a preset condition relating to a recording operation is not satisfied, the data in the predetermined amount of data units to be written in the first information recording unit (21) is written in the second information recording unit (22).

2. The information recording apparatus according to claim 1, **characterized in that** the control section (29) performs the switching control, such that in a state where a time for writing the data in the predetermined amount of data units in the first information recording unit (21) exceeds a preset limit time, an operation of writing data to the first information recording unit (21) is stopped, and the data in the predetermined amount of data units to be written in the first information recording unit (21) is written in the second information recording unit (22) (S2e-S2j).

3. The information recording apparatus according to claim 2, **characterized in that** when a time for writing the data in the predetermined amount of data units in the second information recording unit (22) exceeds a preset limit time, the control section (29) provides a notification to that effect (Sm2).

4. The information recording apparatus according to claim 2, **characterized in that** the control section (29) performs the switching control, such that in a state where an operation of writing data in the predetermined amount of data units to the second information recording unit (22) is completed, data in a predetermined amount of data units following the data written in the second information recording unit (22) is written in the first information recording unit (21) (S2k).

5. The information recording apparatus according to claim 1, **characterized in that** the control section (29) comprises a buffer (20) to selectively supply data to the first and second information recording units (21, 22), and the control section (29) performs the switching control, such that when the data is being written in the first information recording unit (21) in the predetermined amount of data units, in a state where an amount of data accumulated in the buffer (20) exceeds a preset first limit value, an operation of writing data to the first information recording unit (21) is stopped, and the data in the predetermined amount of data units to be written in the first information recording unit (21) is written in the second information recording unit (22) (S3c, S3f-S3j).

6. The information recording apparatus according to claim 5, **characterized in that** the control section (29) performs the switching control, such that in a state where an amount of data accumulated in the buffer (20) decreases below a preset second limit value, data in a predetermined amount of data units following the data written in the second information recording unit (22) is written in the first information recording unit (21) (S3o).

7. The information recording apparatus according to claim 4 or 6, **characterized in that** in a state where the operation of writing data is switched from the second information recording unit (22) to the first information recording unit (21), the control section (29) sets a write start address in the first information recording unit (21) to a value equal to a sum of an address at which the operation of writing data to the first information recording unit (21) is stopped and an address corresponding to an amount of data written in the second information recording unit (22) (S2d, S3q).

8. The information recording apparatus according to claim 2 or 5, **characterized in that** the control section (29) copies data written in the second information recording unit (22) to the first information recording unit (21) and deletes the copied data from the second information recording unit (22) (FIGS. 5 and 6).

9. The information recording apparatus according to claim 1, **characterized in that** the control section (29) performs the switching control, such that in a state where a number of retries for writing the data in the predetermined amount of data units in the first information recording unit (21) exceeds a preset limit number, an operation of writing data to the first information recording unit (21) is stopped and the data in the predetermined amount of data units to be written in the first information recording unit (21) is written in the second information recording unit (22).
